## Europäisches Patentamt
## European Patent Office
## Office européen des brevets

(11) Veröffentlichungsnummer: **0 023 002**
**B1**

(12) # EUROPÄISCHE PATENTSCHRIFT

(45) Veröffentlichungstag der Patentschrift:
16.03.83

(51) Int. Cl.³: **B 29 J 5/00, C 08 L 97/02**

(21) Anmeldenummer: **80104046.0**

(22) Anmeldetag: **12.07.80**

(54) Verfahren zur Verminderung der Formaldehydabgabe aus Spanplatten.

(30) Priorität: **23.07.79 DE 2929775**

(43) Veröffentlichungstag der Anmeldung:
**28.01.81 Patentblatt 81/4**

(45) Bekanntmachung des Hinweises auf die Patenterteilung:
**16.03.83 Patentblatt 83/11**

(84) Benannte Vertragsstaaten:
**AT BE CH DE FR IT LI SE**

(56) Entgegenhaltungen:
**EP-A-0 006 486**
**EP-A-0 012 169**
**BE-A-529 099**
**US-A-3 950 472**

(73) Patentinhaber: **BASF Aktiengesellschaft,
Carl-Bosch-Strasse 38, D-6700 Ludwigshafen (DE)**

(72) Erfinder: **Neumann, Claus, Dr., Schoefferstrasse 27,
D-6520 Worms (DE)**

## Verfahren zur Verminderung der Formaldehydabgabe aus Spanplatten

Die Freisetzung von Formaldehyd aus Spanplatten, die mit Formaldehydkondensaten, insbesondere des Harnstoffs, als Leim gebunden sind, ist ein bekanntes Problem, dem man auf mehrerlei Weise zu begegnen sucht.

Die Verwendung von Leimen, die keinen oder wenig Formaldehyd enthalten bzw. freisetzen, ist leider nur beschränkt möglich.

Das Überziehen der Spanplatten mit Anstrichen, die Formaldehyd binden sollen, ist zwar schon lange vorgeschlagen worden, hat sich aber in der Praxis nur in Sonderfällen (Fertighausbau) durchsetzen können.

Die Behandlung von Spanplatten mit gasförmigem Ammoniak ist in jüngerer Zeit in technischem Masstab durchführbar geworden; hierbei werden die Platten in Kammern einzeln behandelt. Bei Platten, die z.B. in Einetagenpressen hergestellt wurden, müssen derartige Kammern beachtliche Ausmasse aufweisen, es sei denn, die Spanplatten würden auf kleinere Abmessungen zugeschnitten.

In der nicht vorveröffentlichten DE-B Nr. 2829021 (u. EP-A Nr. 6486) ist der Vorschlag enthalten, die noch heissen Spanplatten mit einem vorzugsweise in Lösung aufgebrachten Mittel zu Beseitigung von Formaldehyd zu behandeln, wobei gelöster Harnstoff erwähnt ist, aber auch andere nicht näher bezeichnete ammoniakabspaltende Stoffe gemeint sind. Die Verwendung von Ammoniumsalzen wird nicht in Betracht gezogen.

Es wurde nun gefunden, dass das Bestreuen der noch heissen Platten unmittelbar nach deren Fertigung mit einem Ammoniumsalz den Formaldehyd sehr wirksam und nachhaltig zu binden vermag, wenn man diese Behandlung in einem abgeschlossenen Raum vornimmt.

Als abgeschlossener Raum genügt hierbei schon die Lagerung in einem Stapel, wobei das Ammoniumsalz abwechselnd mit den Platten eingebracht wird. Dabei ist von Vorteil, dass es ohnehin weitgehend üblich ist, die frisch hergestellten Platten in Stapeln zu lagern.

Besonders günstig ist die Verwendung von Ammoniumhydrogencarbonat (Ammoniumbicarbonat), das im Laufe der Lagerung von selbst, u.a. durch seine Flüchtigkeit verschwindet, ohne Spuren zu hinterlassen. Ammoniumcarbonat oder -carbamat können ebenfalls verwendet werden. Man benötigt z.B. Mengen von 50 bis zu 500 g/m² Plattenfläche (diese nur einseitig gerechnet). Die Verwendung auch grosser Mengen ist technisch ohne Nachteil und ist lediglich durch wirtschaftliche Überlegungen begrenzt. Vor allem die Carbonate sind darüber hinaus ohne Nachteil für die Umwelt, von der sie im Rahmen des normalen Stickstoffhaushalts aufgenommen werden.

Dabei ist es vorteilhaft, die von den Plattenstapeln abgegebenen Dämpfe abzusaugen und mit der Abluft aus den Spanplattenpressen, die Formaldehyd enthalten, zu vereinigen. Dadurch ist es möglich, auch diese im Produktionsverlauf anfallenden Formaldehydmengen wirksam zu binden.

Die Herstellung der Platten geschieht wie üblich.

*Beispiele*

Eine Leimflotte wird aus je einem hochfest verleimenden Harnstoff/Melamin/Phenol-Harz (MUPF) und einem sogenannten formaldehydarmen Harnstoffharz (UF; Molverhältnis Formaldehyd zu Harnstoff = 1,4:1) hergestellt, wobei für die Deckschichten (DS) und die Mittelschichten (MS) etwas unterschiedliche Rezepte verwendet werden.

Aus beleimten Fichtenholzspänen werden Plattenrohlinge für eine vorgesehene Plattenstärke von 17 mm geformt und einheitlich 225 s bei 180°C unter Zulage von Distanzleisten verformt. Dabei werden für die Mittelschicht (MS) Späne mit einer Siebweite von 0,6 bis 4 mm, für die Deckschichten (DS) 0,6 bis 2 mm verwendet.

Jeweils eine Platte wird mit den in der Tabelle angegebenen Mengen Ammoniumbicarbonat (umgerechnet auf 1 m²) bestreut und jeweils 3 Platten zusammen im Stapel in einen foliensack gesteckt und 1 h in einer wärmedämmenden Kiste aufbewahrt.

Die Formaldehydmenge, die sich danach aus den Platten entwickeln lässt, wird nach der bekannt FESYP-Perforatormethode bestimmt und unabhängig davon werden die angegebenen mechanisch-technologischen Eigenschaften untersucht.

*Tabelle*

| Leimflotte (alle Angaben in Gewichtsteilen) | DS | MS | DS | MS |
|---|---|---|---|---|
| MUPF-Leim | 100,0 | 100,0 | — | — |
| formaldehydarmer Leim | — | — | 100,0 | 100,0 |
| Paraffinemulsion 50%ig | 6,6 | 6,8 | 6,0 | 8,0 |
| Wasser | 6,0 | 6,7 | 24,2 | 12,5 |
| Härterlösung, 25%ig $NH_4Cl$ | 2,8 | 4,0 | — | — |
| wässeriger Ammoniak | 3,5 | 2,5 | 1,5 | 1,8 |
| $NH_4Cl$ | — | — | 0,2 | 1,8 |
| Wasser | — | — | 1,1 | 6,6 |

*Tabelle* (Fortsetzung)

| Leimflotte (alle Angaben in Gewichtsteilen) | | DS | | MS | | DS | MS |
|---|---|---|---|---|---|---|---|
| Festharzgehalt der Flotte | (%) | 53,0 | | 52,5 | | 50,0 | 50,9 |
| Festharz auf atro Späne | (%) | 13,0 | | 12,0 | | 11,0 | 8,0 |
| $NH_4HCO_3$ (g/m² einseitig) | | 0 | 96 | 192 | 0 | 96 | 192 |

Plattenprüfung jeweils nach der einschlägigen DIN-Norm; Mittelwerte

| | | | | | | | |
|---|---|---|---|---|---|---|---|
| Feuchte beim Prüfen | (%) | 6,7 | 7,0 | 7,0 | 5,9 | 6,2 | 5,5 |
| Dicke | (mm) | 17,3 | 17,3 | 17,2 | 17,2 | 17,2 | 17,3 |
| Rohdichte | (g/cm³) | 0,707 | 0,695 | 0,688 | 0,689 | 0,687 | 0,678 |
| Querzugfestigkeit V20 | (N/mm²) | 1,23 | 1,23 | 1,17 | 0,74 | 0,84 | 0,83 |
| Querzugfestigkeit V100 | (N/mm²) | 0,51 | 0,50 | 0,48 | | | |
| Abhebefestigkeit / Oberseiten | (N/mm²) | 1,54 | 1,51 | 1,56 | 1,58 | 1,59 | 1,47 |
| Abhebefestigkeit / Unterseiten | (N/mm²) | 1,54 | 1,45 | 1,46 | 1,46 | 1,40 | 1,50 |
| Quellung nach 2 h Wasserlagerung | (%) | 1,6 | 1,7 | 1,7 | 2,3 | 2,6 | 2,8 |
| Quellung nach 24 h Wasserlagerung | (%) | 6,9 | 7,3 | 7,4 | 11,6 | 11,6 | 13,6 |

Die vorstehenden Messwerte wurden aus 3 Platten mit je 10 Einzelwerten ermittelt (30fache Messung)

| Formaldehydabgabe/FESYP: | | | | | | | |
|---|---|---|---|---|---|---|---|
| Trockengehalt (%) | | 94,2 | — 93,6 | 93,6 | 95,7 | 94,9 | 95,2 |

| Formaldehydwert (mg) | | | | | | | |
|---|---|---|---|---|---|---|---|
| 1. Probe | | 50 | | 19 | 18 | 9 | 4 |
| 2. Probe | | — | — | — | — | — | — |
| 3. Probe | | | 35 | | | | |

## Patentansprüche

1. Verfahren zur Herstellung formaldehydarmer, vorwiegend aminoplastgebundener Spanplatten, wobei auf die Oberflächen der nach der Fertigung noch warmen Platten ammoniakabspaltende Stoffe aufgebracht werden, dadurch gekennzeichnet, dass man die Platten mit einem flüchtigen Ammoniumsalz bestreut und in einem abgeschlossenen Raum oder in einem Plattenstapel lagert.

2. Verfahren nach Anspruch 1, dadurch gekennzeichnet, dass man die Spanplatten in einem Stapel abwechselnd mit einer Lage des Ammoniumsalzes lagert.

3. Verfahren nach Anspruch 1, dadurch gekennzeichnet, dass man als Ammoniumsalz Ammoniumbicarbonat verwendet.

## Claims

1. A process for the production of predominantly aminoplast-bonded chipboards of low formaldehyde content, an ammonia-eliminating substance being applied to the surfaces of the boards still warm from the manufacturing process, wherein the boards are sprinkled with a volatile ammonium salt and stored in an enclosed space or in a stack.

2. A process as claimed in claim 1, wherein the chipboards are stored in a stack, the boards and layers of the ammonium salt alternating.

3. A process as claimed in claim 1, wherein ammonium bicarbonate is used as the ammonium salt.

## Revendications

1. Procédé pour la fabrication de panneaux de particules agglomérées pauvres en formaldéhyde avec utilisation prépondérante d'aminoplastes en tant que liant, des substances éliminant de l'ammoniac étant appliquées sur les surfaces des panneaux encore chauds à la suite de leur fabrication, caractérisé en ce qu'on saupoudre les panneaux avec un sel d'ammonium volatil et qu'on les stocke dans un espace fermé ou en une pile de panneaux.

2. Procédé selon la revendication 1, caractérisé en ce qu'on stocke les panneaux de particules agglomérées en une pile, en alternance avec une couche du sel d'ammonium.

3. Procédé selon la revendication 1, caractérisé en ce qu'on utilise le bicarbonate d'ammonium en tant que sel d'ammonium.